# EUROPEAN PATENT APPLICATION

(11) **EP 2 544 503 A1**
(43) Date of publication of application: **09.01.2013**
(21) Application number: 11750491.0
(22) Date of filing: 15.02.2011
(51) Int. Cl.: H04W 88/06, H04W 52/02, H04W 84/12

(54) **COMMUNICATION APPARATUS, COMMUNICATION CONTROL METHOD, AND COMMUNICATION CONTROL PROGRAM MEMORY MEDIUM**

(30) Priority: 01.03.2010 JP 2010044014
(71) Applicant: NEC Corporation, Tokyo 108-8001 (JP)
(72) Inventor: ZAITSU, Makoto, Tokyo 108-8001 (JP)
(74) Representative: Vossius & Partner
(86) International application number: PCT/JP2011/053611
(87) International publication number: WO 2011/108379

(57) **Abstract**

PURPOSE: To provide a communication apparatus which makes it possible to, when one communication means of a plurality of communication means performs a communication, prevent the occurrences of interference with the communication due to communications performed by the other communication means.

CONSTITUTION: A communication apparatus includes a first communication unit having a first communication means for transmitting a first transmission signal and a suspension means for suspending the transmission of the first transmission signal performed by the first communication means; and a second communication unit having a second communication means for performing communication using a communication signal affected by interference due to the first transmission signal and a communication arbitration means for instructing the suspension means to execute the suspension when having detected first information included in information to be transmitted to an external apparatus by the second communication means or information having been received from the external apparatus by the second communication means, and instructing the suspension means to release the suspension when having detected second information included in the information to be transmitted or the information having been received.

## Description

### Technical Field

The present invention relates to communication apparatuses, communication control methods and communication control program storage media, and in particular, it relates to a communication apparatus, a communication control method and a communication control program storage medium which have the function of preventing interference in communication.

### Background Art

Recent terminal devices have a high tendency to have various wireless communication functions along with the high level of functionality and the growth of ubiquitous computing environments. Under such a circumstance, among these terminal devices, there have been increased terminal devices having two functions of a wireless local area network (LAN) and Bluetooth (registered trademark).

The most widely used wireless LANs are a series of wireless LANs conforming to the IEEE 802.11 series standard (hereinafter, referred to just "the wireless LAN"), which were standardized by the 802 committee of the Institute of Electrical and Electronic Engineers (IEEE). The wireless LAN includes a group of wireless LANs using a frequency band (2.4 GHz band) which is called the industrial, scientific and medical (ISM) band. In this description, hereinafter, this group of wireless LANs using the ISM band will be made a subject unless explicitly stated otherwise.

The Bluetooth conforms to the IEEE 802.15.1 standard. Further, the Bluetooth also uses the ISM band.

As described above, the wireless LAN and the Bluetooth use the same frequency band. Therefore, when the two functions are caused to concurrently operate without taking any measure for preventing the occurrence of interference with signals thereof, electromagnetic wave interference is mutually caused, whereby communication quality of each of the two functions is likely to be significantly degraded. In some cases, communication of each of the two functions can be hardly performed. In particular, in the case where a communication block for the wireless LAN (hereinafter, a block which realizes the wireless LAN as a function will be referred to as a "wireless LAN communication unit") and a communication block for the Bluetooth (hereinafter, a block which realizes the Bluetooth as a function will be referred to as a "Bluetooth communication unit") are mounted in one apparatus, influence due to the mutual interference is large because the distance between the two communication units is short.

As a method for reducing the influence of the mutual interference between the wireless LAN and the Bluetooth, the adaptive frequency hopping (AFH) technology and the packet traffic arbitration (PTA) technology have been contrived.

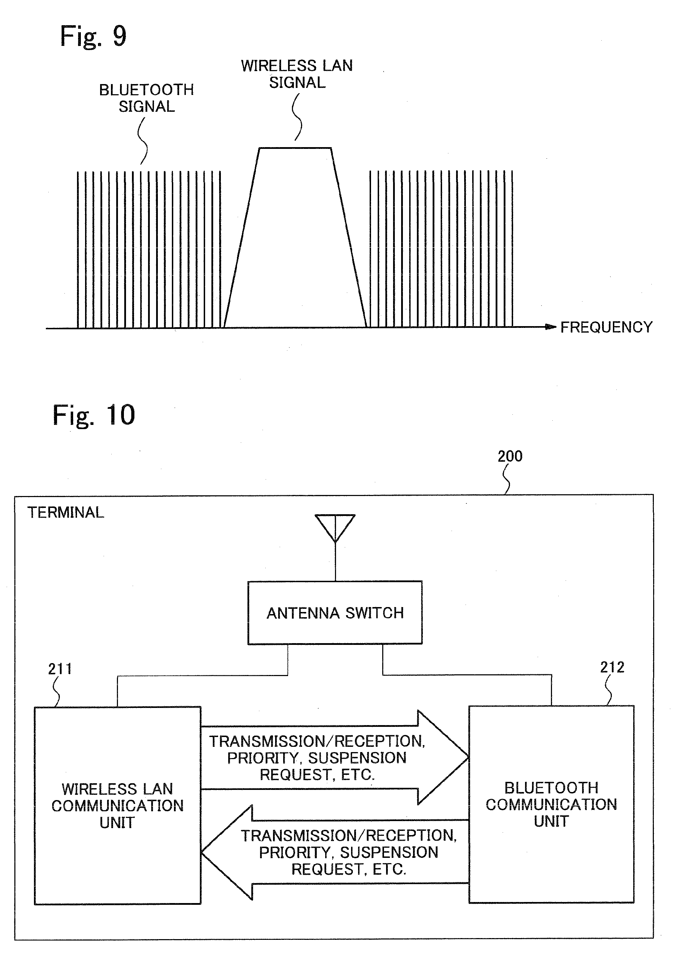

The AFH technology is a method for reducing the influence of the interference by excluding frequencies being used by the wireless LAN from a hopping frequency range of the Bluetooth, and using frequencies which are not overlapped by each other. Fig. 9 illustrates a conceptual diagram of the AFH technology. As shown in Fig. 9, when the AFH technology is applied, the wireless LAN and the Bluetooth perform communications using corresponding frequency bands which are different from each other within the ISM band.

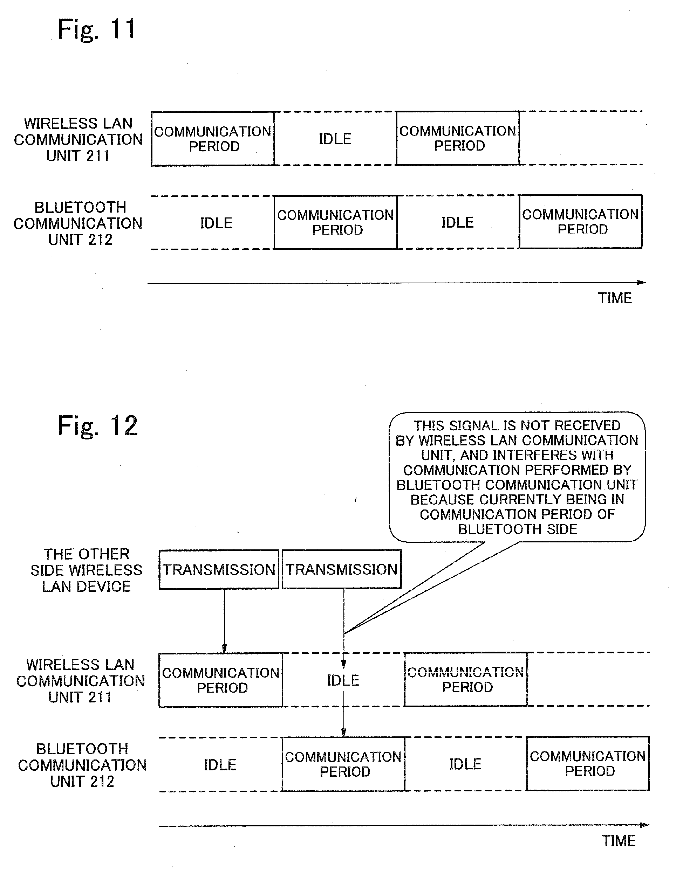

Next, the PTA technology will be described. Fig. 10 illustrates a block diagram of an example of a configuration of a terminal 200 to which the PTA technology is applied, and Fig. 11 illustrates a timing chart indicating an example of operations of a terminal to which the PTA technology is applied.

As shown in Fig. 10, in the PTA technology, pieces of information, such as a request for transmission, reception, suspension or the like, and a priority of traffic, are exchanged between a wireless LAN communication unit 211 and a Bluetooth communication unit 212. Further, as shown in Fig. 11, the wireless LAN communication unit 211 and the Bluetooth communication unit 212 perform communications so as not to be temporally overlapped by each other, thereby enabling prevention of direct collisions of signals. In the PTA technology, each of the two communication functions performs communication alternately on a time division basis, and thus, for each of the two communication functions, a throughput reduction is inevitable. However, in the aspect in which the worst situation in that any transmissions and receptions cannot be performed at all can be avoided, the PTA technology is effective, and thus, is actually also applied to products in the market.

The PTA technology will be described in more detail. Fig. 12 illustrates a timing chart of an example of operations when, regarding a terminal to which the PTA technology is applied, interference occurs. As shown in Fig. 12, the wireless LAN communication unit 211 and the Bluetooth communication unit 212 included in the terminal itself perform communications in accordance with time division control to which the PTA technology is applied. However, when the other side device on the wireless LAN has transmitted a packet to the terminal at an arbitrary timing, interference occurs between the communication of the packet and the communication performed by the Bluetooth communication unit 212. In order to prevent this occurrence of interference, when the wireless LAN communication unit 211 and the Bluetooth communication unit 212 concurrently operate, sometimes, the terminal 200 is caused to operate in accordance with a method obtained by combining the "power-saving mode", which is standardized in the IEEE 802.11, with the PTA technology.

Here, the "power management" specified in the IEEE 802.11 standard will be briefly described. The "power management" is a function for realizing power saving of the wireless LAN, and with respect to operation states of a terminal, the "active mode" and the "power-saving mode (PS mode)" are defined. In the PS mode, the terminal regularly repeats two kinds of operation states, one being an awake state, in which transmissions and receptions are enabled, the other one being a doze state, in which transmissions and receptions are dormant. In the active mode, the terminal is always in the awake state. In the awake state, electric power is supplied to individual circuit blocks of the wireless LAN communication unit 211. In the doze state, the supply of electric power to individual circuit blocks of the wireless LAN communication unit 211 is disconnected, thereby causing the wireless LAN communication unit 211 to be set into a low power consumption state.

During the period when the terminal device is in the doze state, even if the other side devices transmit packets to the terminal device, the terminal device cannot receive the packets. Therefore, the terminal device notifies the other side devices of its transition to the PS mode in advance, thereby causing the other side devices to buffer packets bound for the terminal device inside themselves. In order to receive the buffered packets, the terminal device transmits a polling packet (PS-Poll: Power Save-Poll) to each of the other side devices to cause it to transmit the packets bound for the terminal device, or the terminal device returns to the active mode from the PS mode.

By using the above-described PS mode, it is possible to restrict packet transmissions from the other side devices on the wireless LAN. Consequently, by combining the PS mode with the PTA technology, it is possible to further reduce the influence of interference occurring between the wireless LAN and the Bluetooth. That is, the time division communication according to the PTA technology prevents the occurrence of the mutual interference, and further, the notification of the transition to the PS mode to the other side devices on the wireless LAN causes the other devices to suspend asynchronous packet transmissions.

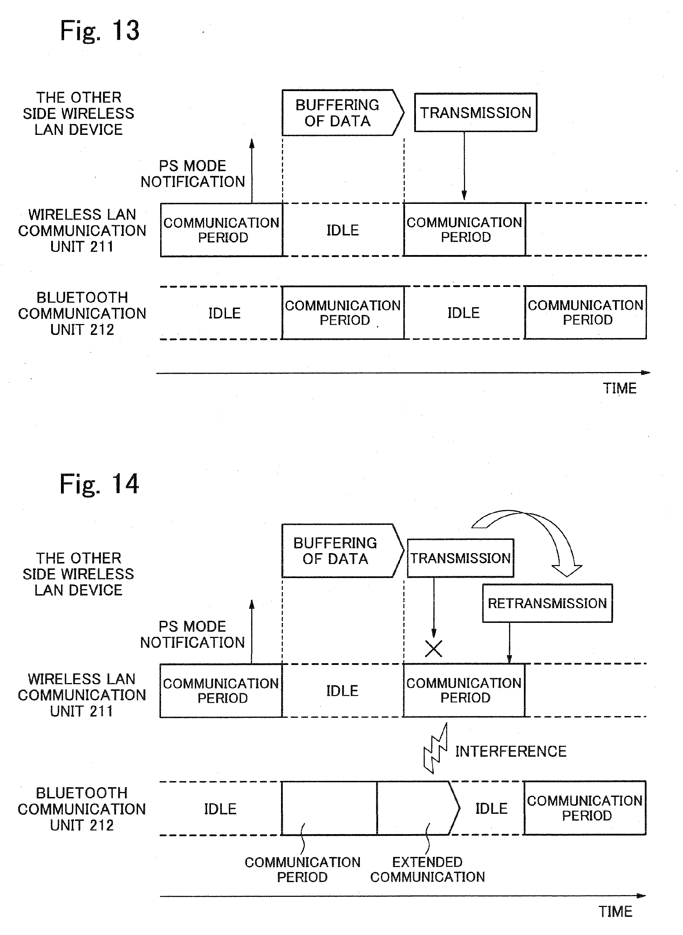

Fig. 13 illustrates a timing chart of an example of operations performed by a terminal using the PTA technology and the PS mode in combination. As shown in Fig. 13, the other side device of the wireless LAN communication unit 211, which has been notified of a transition to the PS mode, reserves a transmission of data to the wireless LAN communication unit 211 and buffers the data. Accordingly, it is possible to prevent the occurrence of interference with the communication performed by the Bluetooth communication unit 212 due to the transmission of the other side device of the wireless LAN communication unit 211.

As described above, by combining the PS mode with the PTA technology, in a normal case, it is possible to prevent the mutual interference from occurring when the wireless LAN and the Bluetooth concurrently operate.

In addition, with respect to the PTA technology, an example of an implementation configuration is published in the IEEE 802.15.2 standard. The main purpose of the PTA technology is to prevent the occurrence of interference by causing different wireless communication units to mutually exchange information and thereby perform communications on a time division basis.

Besides, a technology for preventing the occurrence of mutual interference between the signals of the wireless LAN and the Bluetooth has been also contrived (for example, refer to a patent literature 1). According to a technology disclosed in the patent literature 1, when a wireless communication apparatus conforming to both of the wireless LAN and the Bluetooth has found an access point for the wireless LAN outside itself, it suspends operations of the Bluetooth communication.

### Citation List

### [Patent Literature]

### [Patent Literature 1]

Japanese Patent Application Laid-Open No. 2009-005195 (Pages 11 to 12, and Fig. 5)

### Summary of Invention

### [Technical Problem]

Each of the publicly-known technologies described above has its own technical problem.

First, as described above, it is possible to reduce the influence of the interference by applying the AFH technology or the PTA technology. However, it is not sufficient as a measure for preventing the interference merely to apply the AFH technology or the PTA technology. Hereinafter, reasons thereof will be described.

In the AFH technology, there occurs a problem when the wireless LAN communication unit 211 and the Bluetooth communication unit 212 are mounted in the same device. In the case where the wireless LAN communication unit 211 and the Bluetooth communication unit 212 are mounted in the same device, antennas used for the respective communication units are located close to each other. Alternatively, sometimes, one antenna is shared by the two communication units. Therefore, even though direct collisions are prevented by using non-overlapped frequencies, the frequencies used by the respective communication units are located adjacent to each other. Therefore, a sufficient signal-to-noise (S/N) ratio may not be able to be obtained. That is, in the case where the wireless LAN communication unit 211 and the Bluetooth communication unit 212 are mounted in the same device, depending on the AFH technology, it is difficult to completely prevent the occurrence of interference. This is obvious as a limitation of the AFH technology.

Meanwhile, in the PTA technology, first, there occurs a problem when, in the Bluetooth communication, a data retransmission or the like occurs. Even during the period of communication performed by the wireless LAN, taking into account a practical aspect, usually, it is difficult to forbid the data retransmission in the Bluetooth communication. Therefore, even after having been switched into the period of communication performed by the wireless LAN, sometimes, the Bluetooth side communication continues. Accordingly, a situation, in which the wireless LAN is affected by interference due to the Bluetooth, is likely to occur. The wireless LAN has the mechanism of performing retransmission when having not been able to receive any acknowledgment response packets, each indicating that a corresponding transmission destination device has succeeded in reception. Therefore, it is possible to maintain communication against short-duration interference. However, when the data retransmission frequently occurs, the reception of the acknowledgment response packet is delayed, so that the communication is likely to be disconnected.

Fig. 14 illustrates a timing chart of an example of operations when, regarding a terminal using the PTA technology and the PS mode in combination, interference occurs. As shown in Fig. 14, after the wireless LAN has entered a communication period, if a retransmission of data performed by the Bluetooth communication unit 212 is going on when the other side device of the wireless LAN communication unit 211 transmits data having been buffered thereby, interference between signals occurs.

Further, in operations combining the PTA technology with the PS technology, there occurs a problem when a multicast or broadcast transmission is carried out. That is, the prevention of the occurrence of mutual interference does not function on any broadcast packet (multicast packet) having a multicast or broadcast destination address. This is because the broadcast packet is a packet which is transmitted to unspecified terminal devices at one time. Accordingly, even when a certain terminal device is in the PS mode, any specific measure is not taken only for the terminal device. Namely, the procedures for data transfer in the PS mode, such as described above, are not performed. That is, neither the measure of waiting for a return to the active mode, nor the measure of waiting for a reception of a polling packet, and transmitting data upon reception of the polling packet, is taken.

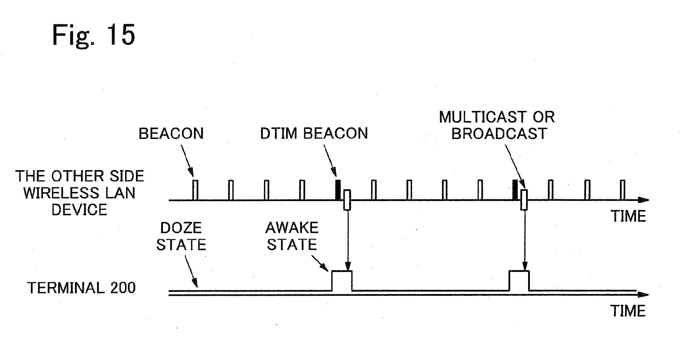

The above-described problem will be described in more detail. The broadcast packet having a multicast or broadcast destination address is transmitted at an arbitrary timing. This operation is an operation specified in the IEEE 802.11 standard. Fig. 15 illustrates a timing chart of a specific example of operations when, regarding a terminal using the PTA technology and the PS mode in combination, broadcast packets are transmitted. As shown in Fig. 15, the other side device of the wireless LAN communication unit 211 transmits a beacon, and immediately subsequent thereto, transmits a multicast frame or a broadcast frame. The beacon includes information, which is called the delivery traffic indication message (DTIM), set therein, this DTIM being a piece of information indicating that data bound for the terminal 200 is currently buffered. Under the normal state where the wireless LAN is operating independently, the terminal 200 can receive the broadcast packet for multicast or broadcast subsequent to reception of the beacon including the DTIM information set therein.

However, when the wireless LAN compete with the Bluetooth in operations thereof, the terminal 200 is likely to be unable to receive the broadcast packet because of the influence of interference due to the Bluetooth. Moreover, here, the problem is that, in the case of the broadcast packet for multicast or broadcast, the mechanism of retransmission not applied. For this reason, once a reception of a broadcast packet has failed because of the influence of interference, the packet cannot be received forever.

The importance of the influence of the failure in the reception of the broadcast packet will be described by way of a specific example. The IP address, which is essential in the transmission control protocol/Internet protocol (TCP/IP) mainly used in the Internet communication, is generally acquired from a network automatically by using a procedure, which is called the dynamic host configuration protocol (DHCP). In this acquisition, sometimes, a response from a DHCP server is broadcast-transmitted. Therefore, when, in the terminal 200, the wireless LAN communication unit 211 and the Bluetooth communication unit 212 compete with each other in operations thereof, as described above, the response from the DHCP server may be unable to be received because of the influence of interference. In this case, the IP address cannot be acquired. The IP address is essential information when performing the TCP/IP communication. Accordingly, such a situation that the IP address cannot be acquired means a situation in which the Internet communication cannot be performed. Needless to say, the occurrence of such a situation that communication cannot be performed because of the influence of interference leads to a fatal problem for the terminal device.

In the technology disclosed in the patent literature 1, when the existence of an access point is found, operations related to the Bluetooth are suspended. That is, only because of the existence of an access point, operations related to the Bluetooth are suspended irrespective of whether, actually, communication using the wireless LAN is to be performed, or not. Accordingly, there is a problem that, even during the period when communication using the Bluetooth is enabled, operations are unnecessarily restricted.

### (Object of Invention)

The present invention has been made in view of the above-described technical problems, and an object of the present invention is to provide a communication apparatus, a communication control method and a communication control program which make it possible to, when one communication means of a plurality of communication means performs a communication, prevent the occurrences of interference with the communication due to communications performed by the other communication means.

### [Solution to Problem]

A communication apparatus according to a first aspect of the present invention includes a first communication unit having a first communication means for transmitting a first transmission signal and a suspension means for suspending the transmission of the first transmission signal performed by the first communication means; and a second communication unit having a second communication means for performing communication using a communication signal affected by interference caused by the first transmission signal and a communication arbitration means for instructing the suspension means to execute the suspension when having detected first information included in information to be transmitted to an external apparatus by the second communication means or information having been received from the external apparatus by the second communication means, and instructing the suspension means to release the suspension when having detected second information included in the information to be transmitted or the information having been received.

A communication control method according to a second aspect of the present invention includes instructing a suspension means, which suspends a transmission of a first transmission signal performed by a first communication means, to execute the suspension when having detected first information included in information to be transmitted to an external apparatus by a second communication means which performs communication using a communication signal affected by interference due to the first transmission signal, or when having detected first information included in information having been received from the external communication apparatus by the second communication means; and instructing the suspension means to release the suspension when having detected second information included in the information to be transmitted or the information having been received.

A communication control program storage medium according to a third aspect of the present invention stores therein a communication control program causing a computer, which is incorporated in a communication apparatus including a first communication unit having a first communication means for transmitting a first transmission signal, and a suspension means for suspending the transmission of the first transmission signal performed by the first communication means, and a second communication unit having a second communication means for performing communication using a communication signal affected by interference due to the first transmission signal, and a communication arbitration means, to function as means including a means for instructing the suspension means to execute the suspension when having detected first information included in information to be transmitted to an external apparatus by the second communication means or information having been received from the external apparatus by the second communication means, and a means for instructing the suspension means to release the suspension when having detected second information included in the information to be transmitted or the information having been received.

### [Advantageous Effects of Invention]

When one communication means of a plurality of communication means performs a communication, a communication apparatus, a communication control method and a communication control program storage medium according to the present invention suspend signal transmissions performed by the other communication means. Accordingly, there is an advantageous effect in that it is possible to prevent the occurrences of interference with the communication performed by the one of the communication means, due to communications performed by the other communication means.

### Brief Description of Drawings

Fig. 1 is a block diagram illustrating a configuration of a terminal according to a first exemplary embodiment of the present invention.
Fig. 2 is a sequence chart illustrating operations of a terminal according to a first exemplary embodiment of the present invention.
Fig. 3 is a timing chart illustrating operations of a communication system according to a first exemplary embodiment of the present invention.
Fig. 4 is a sequence chart illustrating operations of a terminal according to a second exemplary embodiment of the present invention.
Fig. 5 is a timing chart illustrating operations of a communication system according to a second exemplary embodiment of the present invention.
Fig. 6 is a block diagram illustrating a configuration of a terminal according to a fourth exemplary embodiment of the present invention.
Fig. 7 is a flowchart illustrating operations of a terminal according to a fourth exemplary embodiment of the present invention.
Fig. 8 is a flowchart illustrating operations of a terminal according to a fifth exemplary embodiment of the present invention.
Fig. 9 is a conceptual diagram of the AFH technology.
Fig. 10 is a block diagram illustrating an example of a configuration of a terminal to which the PTA technology is applied.
Fig. 11 is a timing chart illustrating an example of operations of a terminal to which the PTA technology is applied.
Fig. 12 is a timing chart illustrating an example of operations when, regarding a terminal to which the PTA technology is applied, interference occurs.
Fig. 13 is a timing chart illustrating an example of operations of a terminal using the PTA technology and the PS mode in combination.
Fig. 14 is a timing chart illustrating an example of operations when, regarding a terminal using the PTA technology and the PS mode in combination, interference occurs.
Fig. 15 is a timing chart illustrating an example of operations when, regarding a terminal using the PTA technology and the PS mode in combination, broadcast packets are transmitted.

### Description of Embodiments

### (First Exemplary Embodiment)

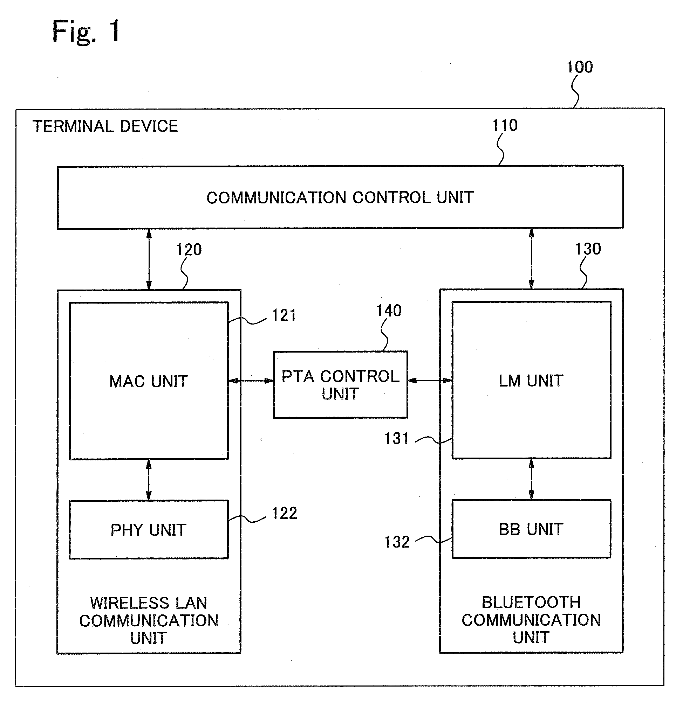

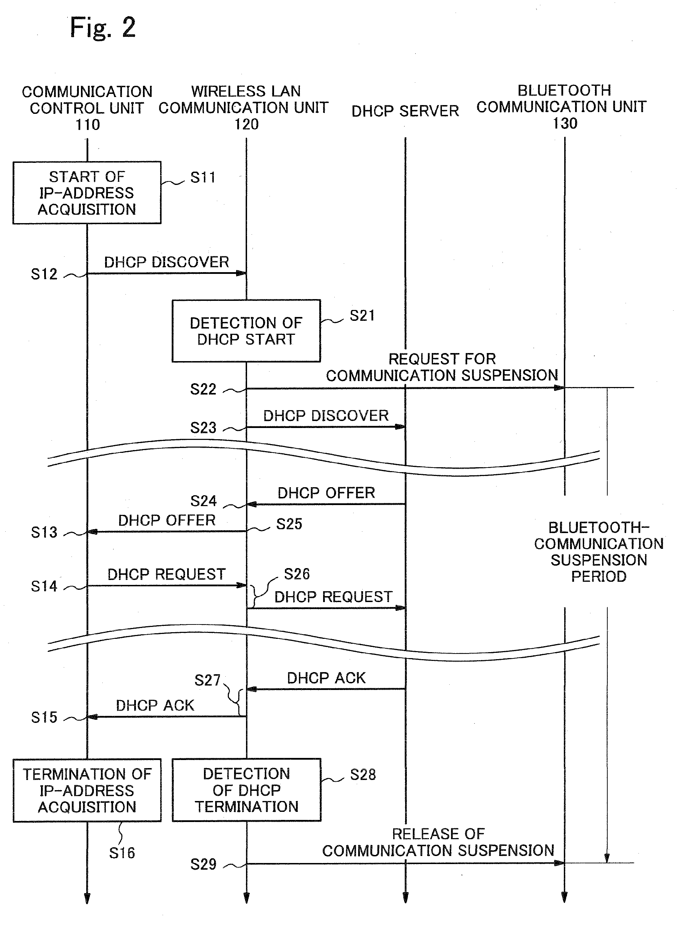

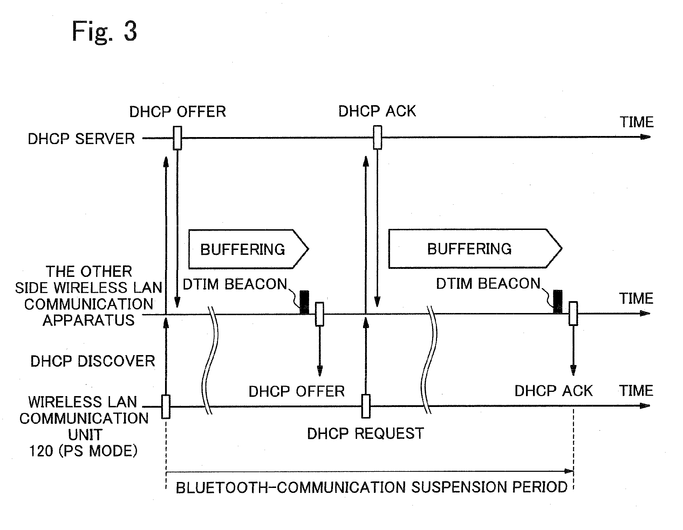

Next, exemplary embodiments according to the present invention will be described in detail with reference to the drawings. Fig. 1 is a block diagram illustrating a configuration of a terminal according to a first exemplary embodiment of the present invention. Fig. 2 is a sequence chart illustrating operations of the terminal according to the first exemplary embodiment. Fig. 3 is a timing chart illustrating operations of a communication system including the terminal according to the first exemplary embodiment.

A configuration of the terminal according to the first exemplary embodiment will be described with reference to Fig. 1. A terminal 100 includes a communication control unit 110, a wireless LAN communication unit 120, a Bluetooth communication unit 130 and a PTA control unit 140.

The communication control unit 110 includes a central processing unit (CPU), a storage device, an input/output unit, a display unit, a timer and the like, just like in the case of a general terminal device. The internal configuration of the communication control unit 110 does not have any direct relations with the gist of the present invention, and thus, detailed descriptions thereof will be omitted. In the communication control unit 110, an operating system (OS) and programs, such as middleware programs, which perform communication control, image processing and the like, and application programs, operate.

The wireless LAN communication unit 120 includes a media access control (MAC) unit 121 and a physical layer (PHY) unit 122, and performs communication employing a wireless LAN method conforming to the IEEE 802. 11 standard. The PHY unit 122 performs wireless communication using the ISM band.

The Bluetooth communication unit 130 includes a link manager (LM) unit 131 and a baseband (BB) unit 132, and performs communication employing the Bluetooth conforming to the IEEE 802.15.1 standard.

The PTA control unit 140 acquires information, such as requests and statuses, from the wireless LAN communication unit 120 and the Bluetooth communication unit 130, and performs arbitration between the wireless LAN communication unit 120 and the Bluetooth communication unit 130 on respective communications.

The communication control unit 110 and each of the wireless LAN communication unit 120 and the Bluetooth communication unit 130 are connected to each other via a wired interface, such as the secure digital input/output (SDIO) or the universal serial bus (USB). This interface does not have any direct relations with the gist of the present invention, and thus, the type of this interface is not limited to specific ones. Further, although, in Fig. 1, for the sake of convenience in description, the PTA control unit 140, the wireless LAN communication unit 120 and the Bluetooth communication unit 130 are represented as separate blocks, respectively, realization aspects are not limited to that corresponding to the configuration shown in Fig. 1.

Next, operations of the terminal 100 will be described with reference to the sequence chart shown in Fig. 2. In the following description, the DHCP protocol for use in the TCP/IP protocol, which is generally used in the Internet communication, will be described as an example. The DHCP protocol is a protocol used when acquiring the IP address.

First, the communication control unit 120 of a wireless LAN terminal device starts an acquisition of the IP address which becomes necessary for performing the TCP/IP communication (step S11). In the TCP/IP communication, the DHCP protocol is generally used for acquiring the IP address,

When acquiring the IP address, first, a communication middleware program (a TCP/IP protocol stack) of the communication control unit 110 transmits DHCP Discover to a network (step S12) . The DHCP Discover is forwarded to a DHCP server on the network by the wireless LAN communication unit 120 (step S23). That is, the DHCP Discover is relayed by the wireless LAN communication unit 120 and an external wireless LAN communication apparatus which is the other side apparatus of the wireless LAN communication unit 120 (not illustrated, hereinafter referred to as "the other side wireless LAN apparatus"), and is forwarded to the DHCP server. Therefore, actually, the wireless LAN communication unit 120 transmits the DHCP Discover to the other side wireless LAN apparatus.

In addition, before the wireless LAN communication unit 120 relays the DHCP Discover to the other side wireless LAN apparatus, as described below, the wireless LAN communication unit 120 detects the presence or absence of the reception of the DHCP Discover (step S21). Further, when having detected the reception of the DHCP Discover, the wireless LAN communication unit 120 makes a request for communication suspension to the Bluetooth communication unit 130 (step S22). Therefore, the wireless LAN communication unit 120 can transmits the DHCP Discover to the other side wireless LAN apparatus during the period when the communication performed by the Bluetooth communication unit 130 suspends.

Upon reception of the DHCP Discover, the DHCP server sends back an IP address, which becomes a candidate of the IP address, by using DHCP Offer. The DHCP Offer is forwarded to the communication control unit 110 by the other side wireless LAN apparatus and the wireless LAN communication unit 120. That is, the wireless LAN communication unit 120 receives the DHCP Offer from the other side Wireless LAN apparatus (step S24). Further, the wireless LAN communication unit 120 transmits the DHCP Offer to the communication control unit 110 (step S25). At this time, sometimes, a destination MAC address of the DHCP Offer is a broadcast address.

As described above, in the case where the destination MAC address is a broadcast address, the other side wireless LAN apparatus transmits the DHCP Offer immediately after having transmitted the beacon including the DTIM even though the terminal 100 is in the PS mode. Therefore, when the wireless LAN communication unit 120 and the Bluetooth communication unit 130 compete with each other in operations thereof, the wireless LAN communication unit 120 is likely to fail in the reception of the DHCP Offer because of the influence of interference due to signals transmitted and received by the Bluetooth communication unit 130.

In order to prevent the failure in the reception of the DHCP Offer, the wireless LAN communication unit 120 detects the presence or absence of the reception of the DHCP Discover from the communication control unit 110 (step S21). Further, when having detected the reception of the DHCP Discover, the wireless LAN communication unit 120 requests the Bluetooth communication unit 130 to suspend the communication performed thereby via the PTA control unit 140 (step S22). In this manner, even if the destination MAC address of the DHCP Offer is a broadcast address, it is possible to exclude the possibility of occurrence of the failure in the reception of the DHCP Offer due to the influence of interference caused by the communication performed by the Bluetooth communication unit 130. As described above, the wireless LAN communication unit 120 forwards the DHCP Offer having been received from the other side wireless LAN apparatus to the communication control unit 110 (step S25). In this manner, the wireless LAN communication unit 120 can receive the DHCP Offer from the other side Wireless LAN apparatus during the period when the communication performed by the Bluetooth communication unit 130 suspends.

The communication control unit 120 receives the IP address, which becomes a candidate, through the DHCP Offer (step S13). Further, if there is no problem with the received IP address, in order to request the formal use of the IP address, the communication control unit 120 transmits DHCP Request (step S14). The DHCP Request is received by the wireless LAN communication unit 120 (step S26), and is forwarded to the DHCP server through relays of the wireless LAN communication unit 120 and the other side Wireless LAN apparatus, just like in the case of the DHCP Discover. In this manner, the wireless LAN communication unit 120 can transmit the DHCP Request to the other side Wireless LAN apparatus during the period when the communication performed by the Bluetooth communication unit 130 suspends.

The DHCP server, which has received the DHCP Request, sends back DHCP Ack to formally give an approval. The DHCP Ack is forwarded to the communication control unit 110 by the other side Wireless LAN apparatus and the wireless LAN communication unit 120, just like in the case of the DHCP Offer (step S27). Sometimes, a destination MAC address of this DHCP Ack is also a broadcast address. However, the suspension state of the communication performed by the Bluetooth communication unit 130 is going on. Thus, the wireless LAN communication unit 120 can receive the DHCP Ack from the other side wireless LAN apparatus without being affected by interference due to the communication performed by the Bluetooth communication unit 130.

Further, when having detected the reception of the DHCP Ack (step S28), the wireless LAN communication unit 120 requests the Bluetooth communication unit 130 to release the suspension of communication via the PTA unit (step S29). In addition, the forwarding of the DHCP Ack to the communication control unit 110 (step S27) may be performed after completion of the processing of step S29.

Through the reception of the DHCP Ack (step S15), the communication control unit 120 confirms that the use of the previously received IP address has been approved, and terminates the IP address acquisition processing (step S16).

Fig. 3 is a timing chart illustrating operations having been described with reference to Fig. 2. As shown in Fig. 3, the DHCP Discover having been transmitted by the terminal 100 reaches a DHCP server on the network via the other side wireless LAN apparatus.

The DHCP server notifies an IP address, which becomes a candidate, by using the DHCP Offer. At this time, sometimes, the destination MAC address is a broadcast address. When the terminal 100 is in the PS mode, the other side wireless LAN apparatus buffers the DHCP Offer packet once, and then transmits it immediately after having transmitted a beacon including the DTIM.

Upon reception of the DHCP Offer, if there is no problem with the offered IP address, subsequently, the terminal 100 transmits the DHCP Request to request the formal use of the offered IP address.

Upon reception of the DHCP Request from the terminal 100, the DHCP server gives a formal approval to the request by transmitting the DHCP Ack thereto.

The terminal 100 prevents the occurrence of interference with the wireless LAN communication due to the Bluetooth communication by suspending the communication performed by the Bluetooth communication unit 130 during the period from the transmission of the DHCP Discover until the reception of the DHCP Ack, that is, from the start of a series of the DHCP sequence until the end thereof, and, as a result, successfully completes the DHCP sequence.

That is, in the terminal 100, the suspension of communication is requested to the Bluetooth communication unit 130 prior to the timing when the beacon including the DTIM information is transmitted. Further, the terminal 100 gives priority to the wireless LAN communication during the period until completion of the reception of the multicast or broadcast packet. The above-described control excludes the occurrence of interference due to the Bluetooth communication, and enables reception of the multicast or broadcast packet in the wireless LAN communication.

As described above, the terminal according to this exemplary embodiment includes the wireless LAN communication unit and the Bluetooth communication unit, and suspends communication performed by the Bluetooth communication unit while the wireless LAN communication unit transmits and receives predetermined packets. Thus, there is an advantage in that the occurrence of interference with the wireless LAN communication due to the Bluetooth communication can be prevented.

### (Second Exemplary Embodiment)

In the first exemplary embodiment, when triggered by the transmission of the DHCP Discover, the suspension of communication is requested to the Bluetooth communication unit 130, and when triggered by the reception of the DHCP Ack, the release of the suspension of communication is requested thereto. Therefore, as a result, the communication performed by the Bluetooth communication unit 130 completely suspends during the period of the DHCP sequence. In contrast, the communication suspension period for the Bluetooth communication unit 130 can be shortened by adding the following control.

As described above, a packet in which a destination MAC address is a broadcast address is transmitted from the other side wireless LAN communication apparatus immediately after a beacon including the DTIM (hereinafter, referred to as a "DTIM beacon") has been transmitted. Therefore, in a communication system according to this second exemplary embodiment, the Bluetooth communication is not suspended from the start of the DHCP sequence until the end thereof, but the communication performed by the Bluetooth communication unit 130 is suspended from the timing when the DTIM beacon is transmitted. Further, the suspension of the communication performed by the Bluetooth communication unit 130 is released at the timing when the DHCP Offer packet or the DHCP Ack packet, in which a destination address is a broadcast address, has been received.

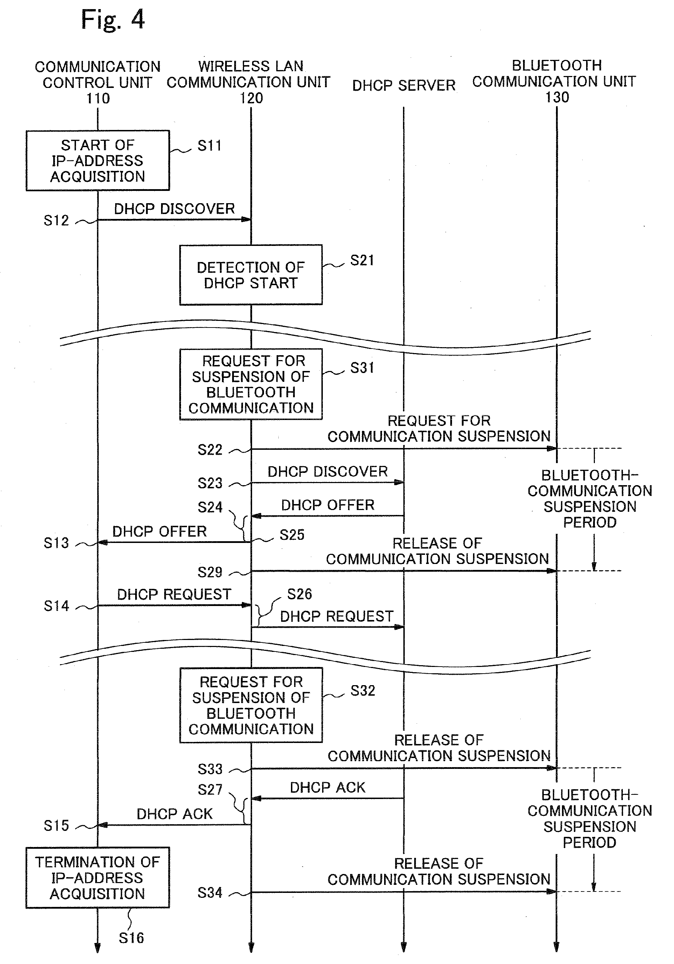

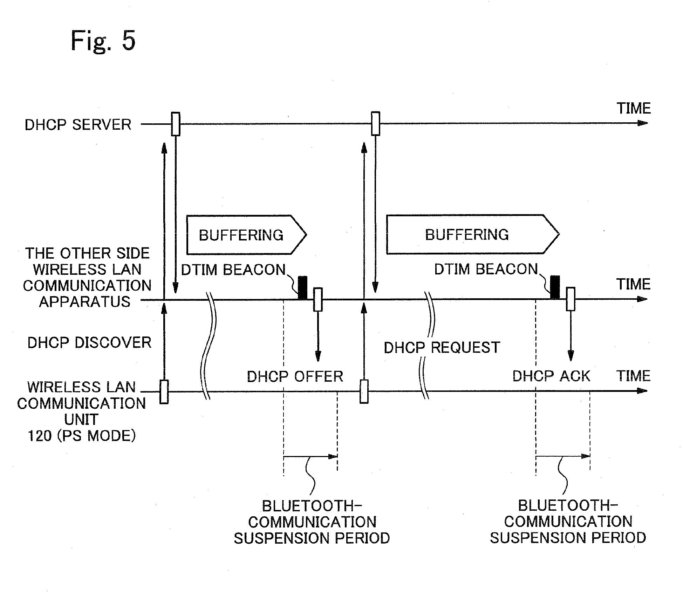

A sequence and a timing chart of operations of the communication system according to this second exemplary embodiment are illustrated in Figs. 4 and 5, respectively. In addition, a configuration of a terminal according to this exemplary embodiment is the same as that shown in Fig. 1.

As shown in Fig. 4, the wireless LAN communication unit 120 detects a timing (a Bluetooth suspension request timing) which is set so as to be anterior to the timing of the transmission of the DTIM beacon by a predetermined period of time (step S31) . Further, the wireless LAN communication unit 120 makes a request for suspension of communication to the Bluetooth communication unit 130 (step S22). Further, after having transmitted the DHCP Offer to the communication control unit 110 (step S25), the wireless LAN communication unit 120 makes a request for release of the suspension of communication to the Bluetooth communication unit 130 (step S29). In step S32, the same processing as that of step S31 is performed, and in step S33, the same processing as that of step S22 is performed. In step S34, after having transmitted the DHCP Ack to the communication control unit 110 (step S27), the wireless LAN communication unit 120 makes a request for release of the suspension of communication to the Bluetooth communication unit 130.

In addition, the Bluetooth suspension request timing in step S31 is a timing which is set because, before the timing when the DTIM beacon is actually transmitted, it is necessary to execute the processing of step S22, and thereby, suspend the communication performed by the Bluetooth communication unit 130.

As described above, the terminal according to this exemplary embodiment suspends the communication performed by the Bluetooth communication unit 130 from the timing of the transmission of the DTIM until a predetermined packet, such as the DHCP Offer or the DHCP Ack, is transmitted. Accordingly, there is an advantage in that the communication suspension period of time for the Bluetooth communication unit 130 can be made short to the utmost extent.

### (Third Exemplary Embodiment)

Next, a third exemplary embodiment will be described. In the first and second exemplary embodiments, it is premised that the wireless LAN communication unit 120 is in the PS mode. According to this third exemplary embodiment, a communication suspension is requested to the Bluetooth communication unit 130 when triggered by the transmission of the DHCP Discover, and at the same time, the wireless communication unit 120 itself transits to the active mode from the PS mode.

Therefore, when all terminals connected to the other side wireless LAN communication device are in the active mode, the other side wireless LAN communication device can transmit a broadcast or multicast packet without waiting for the timing of the transmission of the DTIM beacon.

Upon reception of the DHCP Offer packet or the DHCP Ack packet, in which a destination address is a broadcast address, the wireless communication unit 120 releases the suspension of communication for the Bluetooth, and further, the terminal 100 itself transits to the PS mode.

As described above, the terminal according to this exemplary embodiment transits to the active mode when suspending the communication for the Bluetooth, and transits to the PS mode when releasing the suspension of the communication for the Bluetooth. Accordingly, there is an advantage in that electric power consumed by the terminal 100 can be reduced.

The first to third exemplary embodiments are not limited to those described above, and can be also applied to cases which are ones other than that of the DHCP protocol, and which are ones in which packets are transmitted in the form of multicast or broadcast.

### (Fourth Exemplary Embodiment)

In the first to third exemplary embodiments, exemplary embodiments, in which, as examples of communication methods, the wireless LAN and the Bluetooth are employed, and while communication is performed by a wireless LAN communication unit, operations of a Bluetooth communication unit is suspended, have been described. Obviously from the description of the first to third exemplary embodiments, in these exemplary embodiments, there is a feature in which, when a certain communication unit performs communication, operations of the other communication units are suspended. Therefore, communication methods used in the present invention are not limited to the wireless LAN and the Bluetooth. Moreover, packets which are transmitted and received to/from an external communication apparatus (i.e., the other side wireless LAN communication apparatus in the first to third exemplary embodiments) are not limited to packets related to the DHCP, either. That is, the present invention can be applied to general information communication in general communication apparatuses equipped with a plurality of communication units each operating independently.

Further, when a certain communication unit performs a communication, in order to prevent the occurrences of interference with the communication due to communications performed by the other communication units, it is unnecessary to suspend the communications themselves performed by the other communication units, but it is enough just to suspend only transmissions of signals, performed by the other communication units.

In addition, the present invention is not intended to prevent the occurrences of interference due to signals from external communication apparatuses. But, by suspending transmissions of signals, performed by the other communication units, the number of transmissions of signals from external communication apparatuses indirectly decreases, and as a result, the occurrences of interference due to signals from the external communication apparatuses may also be suppressed.

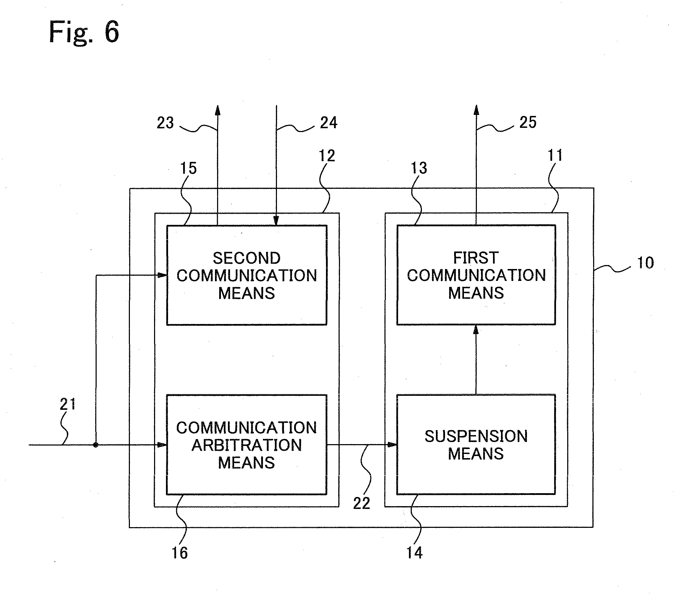

This fourth exemplary embodiment is an exemplary embodiment based on the above-described feature point of the present invention, and includes only a minimum configuration necessary to embody the present invention. Fig. 6 is a block diagram illustrating a configuration of a communication apparatus according to this fourth exemplary embodiment of the present invention. A communication apparatus 10 according to this exemplary embodiment includes a first communication unit 11 and a second communication unit 12.

The first communication unit 11 includes a first communication means 13 and a suspension means 14. The first communication means 13 performs transmission of a first transmission signal 25. Further, the first communication means 13 may perform reception of a first reception signal (not illustrated). The suspension means 14 suspends the transmission of the first transmission signal 25 performed by the first communication means 13.

A second communication unit 12 includes a second communication means 15 and a communication arbitration means 16.

The second communication means 15 performs communication based on a second communication method by using communication signals affected by interference due to the first transmission signal 25. Specifically, the communication signals are a transmission signal 23, which is transmitted by the second communication means 15, and a reception signal 24, which is received by the second communication means 15.

The communication signals are, for example, signals which propagate through the same medium as a medium through which the first transmission signal 25 propagates, and their used frequency band is equal to that of the first transmission signal 25. Therefore, while the first transmission signal 25 is transmitted, the communication signals are affected by certain interference due to the first transmission signal 25. Accordingly, it is a gist of this exemplary embodiment to suspend the transmission of the first transmission signal 25 while the second communication means 15 performs communication.

Upon detection of predetermined information included in information to be transmitted to an external communication apparatus (not illustrated), or information having been received from an external communication apparatus by the second communication means 15, the communication arbitration means 16 instructs the suspension means 14 to suspend the transmission of the first transmission signal 25 or release the suspension thereof. The information to be transmitted to an external communication apparatus is information which is to be transmitted thereto under the state where it is included in the second transmission signal 23. The information having been received from an external communication apparatus is information which has been transmitted therefrom under the state where it is included in the second reception signal 24.

For example, upon detection of first information included in transmission information 21, the communication arbitration means 16 outputs a transmission control signal 22 to the suspension means 14 to cause it to suspend the transmission of the first transmission signal 25 performed by the first communication means 13. Moreover, upon detection of second information included in the received signal 24, the communication arbitration means 16 outputs the transmission control signal 22 to the suspension means 14 to cause it to release the suspension of the transmission of the first transmission signal 25 performed by the first communication means 13. The above-described case corresponds to a case where the communication apparatus 10 starts communication, and an external communication apparatus terminates the communication, or the like.

Alternatively, upon detection of the second information included in the reception signal 24, the communication arbitration means 16 may suspend the transmission of the first transmission signal 25 performed by the first communication means 13, and upon detection of the first information included in the transmission information 21, the communication arbitration means 16 may release the suspension of the transmission of the first transmission signal 25. The above-described case corresponds to a case where the communication apparatus 10 starts communication in accordance with a request from an external communication apparatus, and the communication apparatus 10 terminates the communication, or the like.

Besides, upon detection of the first information included in the transmission information 21, the communication arbitration means 16 may suspend the transmission of the first transmission signal 25, and upon detection of third information included in the transmission information 21, the communication arbitration means 16 may release the suspension thereof. Alternatively, upon detection of the second information included in the reception signal 23, the communication arbitration means 16 may suspend the transmission of the first transmission signal 25, and upon detection of fourth information included in the reception signal 23, the communication arbitration means 16 may release the suspension thereof. As described above, when triggered by a detection of predetermined information included in information to be transmitted or information having been received, the communication apparatus 10 suspends the transmission of the first transmission signal 25 performed by the first communication means 13, or releases the suspension thereof. That is, upon detection of predetermined information in the transmission information 21 or the reception signal 23, the communication apparatus 10 suspends the transmission of the first transmission signal 25, and thereby, sets a state where only the second communication means 15 is operable. Moreover, upon detection of predetermined information included in the transmission information 21 or the reception signal 23, the communication apparatus 10 releases the suspension of the transmission of the first transmission signal 25, and thereby, sets a state where only the first communication means 13 is operable.

Accordingly, only by causing the transmission information 21 or the reception signal 24 to include predetermined information, the transmission of the first transmission signal 25 is suspended, thereby enabling prevention of the occurrence of interference with the second transmission signal 23 and the second reception signal 24 due to the first transmission signal 25. Moreover, only by causing the transmission information 21 or the reception signal 24 to include predetermined information, the suspension of the transmission of the first transmission signal 25 can be released. That is, only by causing information exchanged in communication performed by the second communication unit 12 to include predetermined information, it is possible to obtain an advantage in that the signal transmission performed by the first communication unit 11 can be suspended, and the suspension thereof can be released.

Furthermore, when transmitting the transmission information 21 by using the first transmission signal 23, upon detection of the first information included in the transmission information 21, the communication apparatus 10 may make only the second communication means 15 operable by performing suspension related to the first communication means 13. In this case, similarly, the second transmission signal 23 including the transmission information 12 is not affected by interference due to the first transmission signal 25. Upon detection of the second information included in the second reception signal 24, the communication apparatus 10 releases the suspension related to the first communication means 13, and sets it into an operable state. Accordingly, the second transmission signal 23 and the second reception signal 24 are not affected by interference due to the first transmission signal 23 until the second communication means 15 receives the second information after having transmitted the first information.

In this manner, when suspending the transmission of the first transmission signal 25 performed by the first communication means 13, all operations of the first communication means 13 may be suspended. In this case, all signal transmissions and receptions performed by the first communication means 13 are suspended, and thus, the occurrence of interference with the second communication means 15 is prevented. In addition, it is desirable that power consumption of the first communication unit 11 during the period when communication performed by the first communication means 13 is suspended is smaller than that of the first communication unit 11 during the period when communication performed by the first communication means 13 is in an enabled state.

Moreover, the second communication means 15 may also have a suspension means for suspending the transmission of the second transmission signal 24. In this case, it is possible for the second communication means 15 to receive signals, but the occurrence of interference with communication performed by the first communication means 13 is prevented. Alternatively, the second communication means 15 may also have a suspension means for suspending all operations of the second communication means 15. It is desirable that power consumption of the second communication unit 12 during the period when operations of the second communication means 15 are suspended is smaller than that of the second communication unit 12 during the period when the operations of the second communication means 15 are in an enabled state.

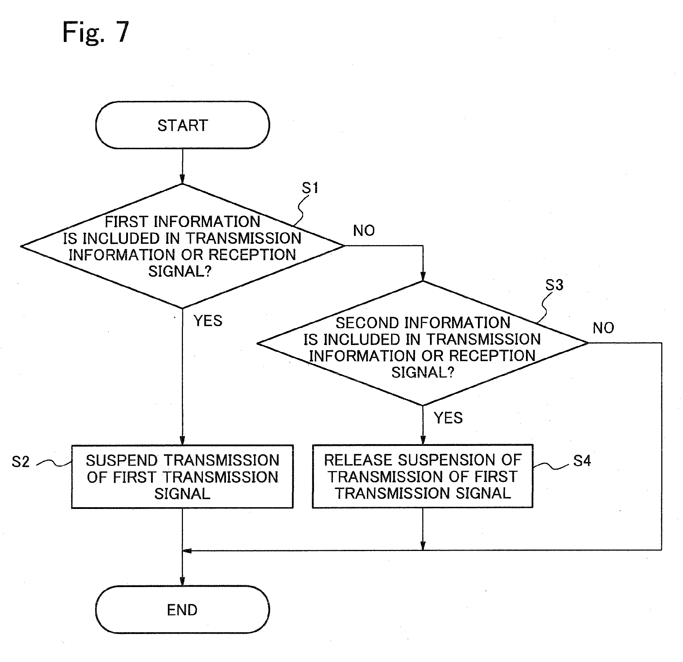

Processing of the communication arbitration means 16 can be executed by program control performed by a CPU (not illustrated) incorporated in the second communication unit 12. Fig. 7 is a flowchart illustrating operations of the communication arbitration means 16 of the terminal according to this fourth exemplary embodiment of the present invention.

First, the communication arbitration means 16 determines whether the first information is included in the transmission information 21 or the reception signal 24, or not (step S1). If the first information is included (step S1: Yes), the communication arbitration means 16 suspends the transmission of the first transmission signal 25 (step S2).

If the first information is not included (step S1: No), the communication arbitration means 16 determines whether the second information is included in the transmission information 21 or the reception signal 24, or not (step S3). If the second information is included (step S3: Yes), the communication arbitration means 16 releases the suspension of the transmission of the first transmission signal 25 (step S4).

If neither the first information nor the second information is included in the transmission information 21 or the reception signal 24 (step S3: No), the communication arbitration means 16 terminates the process flow.

### (Fifth Exemplary Embodiment)

This fifth exemplary embodiment is also intended for a communication apparatus having a minimum configuration necessary to embody the present invention. The communication apparatus 10 according to this exemplary embodiment has the same configuration as that of the communication apparatus, shown in Fig. 6, according to the fourth exemplary embodiment. But, the fourth exemplary embodiment and the fifth exemplary embodiment are different in the condition for suspending the transmission performed by the first communication means 13 and/or the condition for releasing the suspension.

The communication apparatus 10 according to this exemplary embodiment includes the first communication unit 11 and the second communication unit 12. The first communication unit 11 includes the first communication means 13 which performs communication, and the suspension means 14 which suspends the communication performed by the first communication means. The second communication unit 12 includes the second communication means 15 which performs communication, and the communication arbitration means 16.

The communication arbitration means 16 of the communication apparatus 10 according to this exemplary embodiment instructs the suspension means 14 to execute a suspension, or a release the suspension, in synchronization with a reference timing at which predetermined packets are transmitted and received to/from an external communication apparatus. That is, upon detection of a reference timing, the communication arbitration means 16 instructs the suspension means 14 to execute a suspension or a release of the suspension. In addition, the above-described "synchronization" means keeping a constant relation with the reference timing, and does not require even a perfect correspondence in timing.

Further, upon detection of predetermined information included in information to be transmitted to the external communication apparatus, or information having received from the external communication apparatus by the second communication means 15, the communication arbitration means 16 instructs the suspension means 14 to execute a suspension or a release of the suspension.

For example, upon detection of a reference timing, the communication arbitration means 16 outputs the transmission control signal 22 to the suspension means 14 to cause it to suspend the transmission of the first transmission signal 25 performed by the first communication means 13. Further, upon detection of the second information included in the reception signal 24, the communication arbitration means 16 outputs the transmission control signal 22 to the suspension means 14 to cause it to release the suspension of the transmission of the first transmission signal 25 performed by the first communication means 13. The above-described case corresponds to a case where the communication apparatus 10 starts communication at a predetermined timing, and an external communication apparatus terminates the communication, or the like.

As described above, the communication apparatus 10 according to this exemplary embodiment suspends the transmission of the first transmission signal 25 at a predetermined timing, thereby making only the second communication means 15 operable. Accordingly, there is an advantage in that, during a predetermined period of time, the transmission signal 24 and the reception signal 23 are not affected by interference due to the first transmission signal 25.

In addition, upon detection of the second information included in the reception signal 24, the communication arbitration means 16 may suspend the transmission of the first transmission signal 25 performed by the first communication means 13, and upon detection of a reference timing, the communication arbitration means 16 may release the suspension of the transmission of the first transmission signal 25.

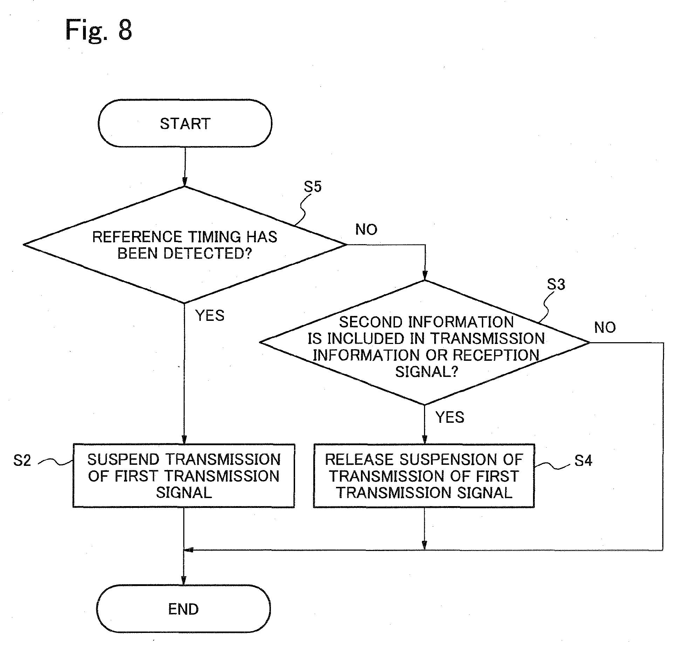

Processing of the communication arbitration means 16 can be executed by program control performed by a CPU (not illustrated) incorporated in the second communication unit 12. Fig. 8 is a flowchart illustrating operations of the communication arbitration means 16 of the terminal according to this fifth exemplary embodiment of the present invention.

First, the communication arbitration means 16 detects a reference timing (step S5). Upon detection of the reference timing (step S5: Yes), the communication arbitration means 16 suspends the transmission of the first transmission signal 25 (step S2).

If the first information is not included (step S5: No), the communication arbitration means 16 determines whether the second information is included in the transmission information 21 or the reception signal 24, or not (step S3). If the second information is included (step S3: Yes), the communication arbitration means 16 releases the suspension of the transmission of the first transmission signal 25 (step S4).

If neither the first information nor the second information is included in the transmission information 21 or the reception signal 24 (step S3: No), the communication arbitration means 16 terminates the process flow.

In addition, for the fourth and fifth exemplary embodiments, part of means thereof can be combined. For example, as a suspension condition for the first communication means, the suspension condition applied in the fourth exemplary embodiment may be applied, and as a suspension release condition for the first communication mean, the suspension release condition applied in the fifth exemplary embodiment may be applied. Alternatively, the reverse thereof is acceptable.

Further, the second communication unit may also include a suspension means for the second communication means, and may cause it to perform suspension, or release of the suspension, related to the second communication means in accordance with the suspension, or the release of the suspension, related to the first communication means. That is, when performing suspension related to the first communication means, the release of suspension related to the second communication means may be performed, and when performing release of the suspension related to the first communication means, suspension related to the second communication means may be performed.

Hereinbefore, the present invention has been described with reference to the above-described exemplary embodiments, but the present invention is not limited to the above-described exemplary embodiments. Various changes, which can be understood by those skilled in the art within the scope of the present invention, can be made on the configuration and the details of the present invention.

This application insists on the priority based on the Japanese application Japanese Patent Application No. 2010-044014 proposed on March 1st, 2010 and takes everything of the disclosure here.

### Industrial Applicability

The communication apparatus according to the present invention can be applied to, not only the terminal having been described in the exemplary embodiments, but also various electronic apparatuses equipped with communication units conforming to a corresponding plurality of communication methods. That is, the communication apparatus according to the present invention can be applied to various electronic apparatuses each including a plurality of communication units conforming to corresponding predetermined communication methods, such as the wireless LAN and the Bluetooth. known examples of the electronic apparatuses include terminals, such as a mobile phone, a personal handy-phone system (PHS), a personal digital assistant (PDA, i.e., a personal portable-type information communication device), and the like. In addition, all or part of the communication methods, to which the respective plurality of communication units correspond, may be the same. Alternatively, each of them may be different from one another.

### Reference Signs List

- 10:: a communication apparatus
- 11:: a first communication unit
- 12:: a second communication unit
- 21:: transmission information.
- 22:: a transmission control signal.
- 23:: a second transmission signal.
- 24:: a second reception signal.
- 25:: a first transmission signal.
- 100, 200:: a terminal device.
- 110:: a communication control unit
- 120, 211:: a wireless LAN communication unit
- 121:: a MAC unit
- 122:: a PHY unit
- 130, 212:: a Bluetooth communication unit
- 131:: an LM unit
- 132:: a BB unit

## Claims

1. A communication apparatus, comprising:
a first communication unit including first communication means for transmitting a first transmission signal and suspension means for suspending the transmission of the first transmission signal performed by the first communication means; and
a second communication unit including second communication means for performing communication using a communication signal affected by interference due to the first transmission signal, and communication arbitration means for instructing the suspension means to execute the suspension when having detected first information included in information to be transmitted to an external apparatus by the second communication means or information having been received from the external apparatus by the second communication means, and instructing the suspension means to release the suspension when having detected second information included in the information to be transmitted or the information having been received.

2. The communication apparatus according to claim 1, wherein the communication arbitration means instructs the suspension means to execute the suspension when having detected the first information included in the information to be transmitted, and instructs the suspension means to release the suspension when having detected the second information included in the information having been received.

3. The communication apparatus according to claim 2, wherein the first information is information which is transmitted by the second communication means at the beginning of a predetermined information exchange commenced between the second communication means and the external communication apparatus, and the second information is information which is received by the second communication means at the end of the information exchange.

4. The communication apparatus according to any one of claims 1 to 3, wherein the communication arbitration means instructs the suspension means to execute the suspension or release the suspension in synchronization with a reference timing at which a predetermined packet is transmitted and received to/from the external communication apparatus.

5. The communication apparatus according to claim 4, wherein the communication arbitration means instructs the suspension means to execute the suspension in synchronization with the reference timing, and after having instructed the suspension, the communication arbitration means instructs the suspension means to release the suspension when having detected the second information included in the received information.

6. The communication apparatus according to claim 4 or claim 5, wherein the predetermined information exchange is performed between the second communication means and the external communication apparatus during a predetermined period after the reference timing.

7. The communication apparatus according to claim 3 or claim 6, wherein the information exchange includes a transmission of a request for predetermined processing to the external communication apparatus, and a reception of a response to the request therefor from the external communication apparatus.

8. The communication apparatus according to claim 3, claim 6 or claim 7, wherein the information exchange includes a transmission and a reception of a broadcast packet.

9. The communication apparatus according to claim 3 or any one of claims 7 to 8, wherein the external communication apparatus is a DHCP server, and the information exchange is an information exchange with the DHCP server for acquiring an IP address therefrom.

10. The communication apparatus according to any one of claims 1 to 9, wherein the second communication unit includes a second suspension means for suspending a transmission of a second transmission signal performed by the second communication means, and the communication arbitration means releases the suspension of the transmission of the second signal when suspending the transmission of the first transmission signal, and suspends the transmission of the second transmission signal when releasing the suspension of the transmission of the first transmission signal.

11. The communication apparatus according to any one of claims 1 to 10, wherein the communication arbitration means suspends a communication operation performed by the first communication means when suspending the transmission of the first transmission signal.

12. The communication apparatus according to any one of claims 1 to 11, wherein the communication arbitration means suspends a communication operation performed by the second communication means when suspending the transmission of the second transmission signal.

13. A communication control method, comprising:
instructing suspension means, which suspends a transmission of a first transmission signal performed by first communication means, to execute the suspension when having detected first information included in information to be transmitted to an external apparatus by second communication means which performs communication using a communication signal affected by interference due to the first transmission signal, or when having detected first information included in information having been received from the external communication apparatus by the second communication means; and
instructing the suspension means to release the suspension when having detected second information included in the information to be transmitted or the information having been received.

14. The communication control method according to claim 13, wherein the communication control method includes instructing the suspension means to execute the suspension or release the suspension in synchronization with a reference timing at which a predetermined packet is transmitted and received to/from the external communication apparatus.

15. A communication control program storage medium that stores therein a communication control program causing a computer, which is incorporated in a communication apparatus including a first communication unit having first communication means for transmitting a first transmission signal, and suspension means for suspending the transmission of the first transmission signal performed by the first communication means, and a second communication unit having second communication means for performing communication using a communication signal affected by interference due to the first transmission signal, and communication arbitration means, to function as means comprising:
means for instructing the suspension means to execute the suspension when having detected first information included in information to be transmitted to an external apparatus by the second communication means or information having been received from the external apparatus by the second communication means; and
means for instructing the suspension means to release the suspension when having detected second information included in the information to be transmitted or the information having been received.

16. The communication control program storage medium that stores therein the communication control program set forth in claim 15, wherein the communication control program causes the computer to function as means for instructing the suspension means to execute the suspension or release the suspension in synchronization with a reference timing at which a predetermined packet is transmitted and received to/from the external communication apparatus.
